Europäisches Patentamt

(19) European Patent Office

Office européen des brevets

(11) Publication number: 0 161 229
A2

# (12) EUROPEAN PATENT APPLICATION

(21) Application number: 85850144.8

(22) Date of filing: 26.04.85

(51) Int. Cl.⁴: A 47 J 37/00
A 47 J 36/02, B 65 D 81/34

(30) Priority: 04.05.84 SE 8402428

(43) Date of publication of application:
13.11.85 Bulletin 85/46

(84) Designated Contracting States:
CH DE FR GB LI NL

(71) Applicant: AB IGGESUNDS BRUK
Box 15
S-825 00 Iggesund(SE)

(72) Inventor: Fransén, Claes
Vällarevägen 4
S-825 00 Iggesund(SE)

(74) Representative: Wideberg, Sven Olle et al,
AWAPATENT AB Box 7402
S-103 91 Stockholm(SE)

(54) A method and arrangement for baking/frying in a distribution package of pet-coated cardboard.

(57) The invention relates to a method and arrangement for baking/frying of foodstuff in a distribution package of PET-coated cardboard. A container is provided with a recess which closely accommodates the package. A cover means is arranged to retain and protect the flanged-out brim of the package which thus is protected against too strong heating. The container may be provided with double walls and the resulting interspace or compartment is filled with water which means increased protection against too strong heating of the oven air.

FIG. 2

EP 0 161 229 A2

# A METHOD AND ARRANGEMENT FOR BAKING/FRYING IN A
# DISTRIBUTION PACKAGE OF PET-COATED CARDBOARD

The present invention relates to a method and arrangement for baking or frying foodstuff in a distribution package of cardboard provided with a temperature-resistant coating, at present PET (poly ethylene terephthalate). Such cardboard is today used most for ready-prepared food which is to be reheated in the package. In baking or frying in an oven the outside and edges of the package are exposed to overheating and contamination.

An object of the invention is to provide a method and a device permitting using the package also for cooking food in an oven, whereupon the package is cooled and sealed before distribution. This extra function is obtained by taking measures for protecting the most sensitive parts of the package during the baking process. This is achieved by making a container which can receive the package and having a cover means to protect the flanged-out border or brim of the package from the heat of the oven.

The invention will now be described more fully with reference to the accompanying drawing, in which:

Fig. 1 shows a first embodiment of the invention;

Fig. 2 shows a modified embodiment of the invention; and

Fig. 3 shows a further modified embodiment of the invention.

In the drawing a package or trough for foodstuff to be baked or fried is designated by 1. A container, generally designated by 2, is provided with a recess 3 which is conformed to the shape of the package. The package or trough is provided with a flanged-out brim 4. When the package has been placed in the container it is locked up by means of a clamp or a cover means 5.

PR/BP

The shape of the cover means is such as to cover the flanged-out brim 4 and it has an opening substantially corresponding to the opening of the package. Between the cover means and the brim there may be inserted a packing cf soft, yieldable material, e.g. a silicone rubber packing 7. To permit handling of the container in hot condition it is provided with a handle 8.

The package is thereupon baked or fried in that the container is placed in an oven. The cover means will thus protect the flanged-out brim of the package at the same time as the container supports the bottom and side sections of the package.

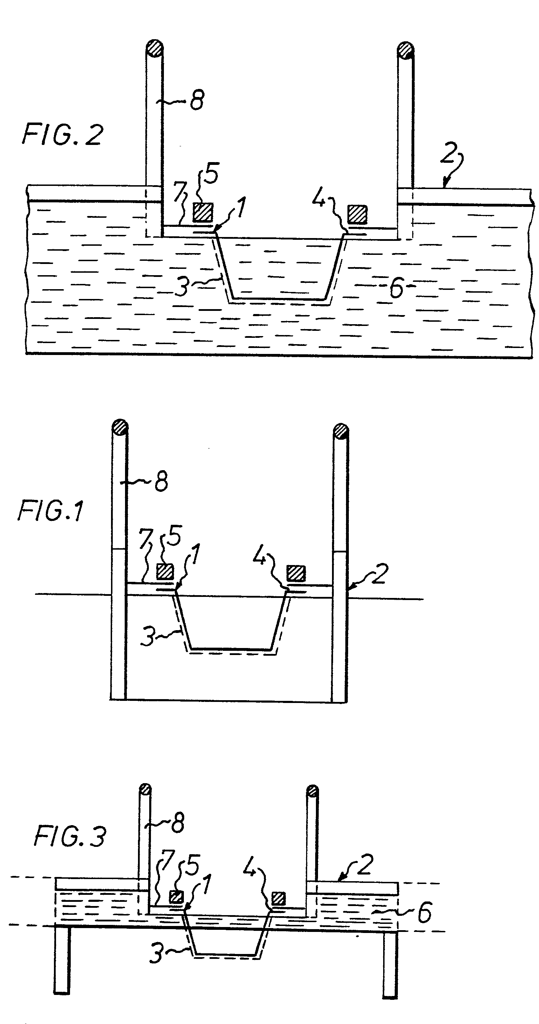

In a modified embodiment of the container this is provided with double walls according to Fig. 2, and the interspace or compartment 6 thus formed is filled with water. In baking, heat is therefore supplied, on one hand, through the walls of the water compartment and, on the other hand, from the top side freely exposed to the heat cf the oven. The water temperature never exceeds 90°C if the oven temperature is about 200°C. The trough will thus be protected against too strong heating.

In a further modified embodiment, Fig. 3, the container is provided with double walls only at its upper part adjacent the flanged-out brim of the trough, and the resulting interspace is filled with water. The particularly sensitive area at the upper part of the trough will thus be protected against overheating while the lower part is freely exposed to the oven air via the container.

In a preferred embodiment for industrial preparation of food the container may be constructed for receiving several packages at a time, or a plurality of containers may be arranged adjacent each other under a supporting plate or the like. In that case the water compartment is common to all the packages.

PET-coated cardboard can thus be used for direct cooking of foodstuff without any visible defects arising on the package. A condition therefor is that the most temperature-exposed parts of the package are protected against overheating and contamination. However, the invention is not to be considered restricted to the above examples of the embodiment but may be modified within the scope of the appended claims.

CLAIMS

1. A method of baking/frying of foodstuff in a distribution package of PET-coated cardboard, c h a r a c t e r i z e d   by forming a container so that the package will closely fit in the container, placing over the upper edge of the container a movable cover means having an opening corresponding to the opening of the package and so contructed that it will cover and protect the flanged-out border or brim of the package, and baking in an oven the container with package attached.

2. A method as claimed in claim 1, c h a r a c t e r i z e d   by making the container double-walled, and filling the interspace or compartment between the walls with water.

3. A method as claimed in claim 1, c h a r a c t e r i z e d   by providing the container with double walls adjacent its upper edge portion, and filling the resulting interspace with water.

4. An arrangement for baking/frying of foodstuff in a distribution package of PET-coated cardboard, c h a r a c t e r i z e d   in that it includes a container formed so as to closely accommodate the package, and a cover means movably arranged at the upper edge portion of the container and having an opening corresponding to the opening of the package, said cover means covering and protecting the flanged-out brim of the package when the container is baked in an oven.

5. An arrangement as claimed in claim 4, c h a r a c t e r i z e d   in that the container is made double-walled and that the interspace between the walls is filled with water.

6. An arrangement as claimed in claim 4, c h a r a c t e r i z e d   in that the container is provided with double walls adjacent its upper edge portion, and the interspace thus formed is filled with water.

7. An arrangement as claimed in any of claims 4 - 6, c h a r a c t e r i z e d  in that the container is provided with a handle.

8. An arrangement as claimed in any of claims 4 - 7, c h a r a c t e r i z e d  in that a packing of yieldable material is disposed between the flanged-out brim of the package and the cover means.

9. An arrangement as claimed in any of claims 4 - 8, c h a r a c t e r i z e d  in that the container is constructed for receiving a plurality of packages at a time, and the water compartment is common to all the packages.

FIG. 2

FIG. 1

FIG. 3

0161229

1/1